# EUROPEAN PATENT APPLICATION

(11) **EP 4 725 744 A1**
(43) Date of publication of application: **15.04.2026**
(21) Application number: 25207827.4
(22) Date of filing: 09.10.2025
(51) Int. Cl.: B60L 3/00, B60L 15/00, B60L 15/20, B64D 27/34, H02P 5/46, H02P 25/22

(54) **A CONTROL SYSTEM**

(30) Priority: 11.10.2024 GB 202414981
(71) Applicant: Evolito Ltd, Bicester, Oxford Oxfordshire OX25 2PA (GB)
(72) Inventor: ANTHONY, John Edward, Abingdon, OX14 3TW (GB); WILLIAMS, Connel, Princethorpe, CV23 9QA (GB)
(74) Representative: Marks & Clerk LLP

(57) **Abstract**

A vehicle controller outputs a speed demand to a master inverter system and one or more slave inverter systems. The master inverter system is configured to generate a 'master torque' output for driving a first electrical machine based on the speed demand from the vehicle controller and data indicating the speed of the first electrical machine, and the one or more slave inverter systems are configured to generate a respective 'slave torque' output for driving a respective electrical machine based on the speed demand from the vehicle controller. The master inverter system uses a master speed controller to generate a master torque demand based on the speed demand from the vehicle controller and data indicating the speed of the first electrical machine, which is then passed to a master torque controller for generating the master torque output. The one or more slave inverter systems use a respective slave model to output a slave torque demand based on the speed demand from the vehicle controller, which is then passed to a respective slave torque controller for generating the respective slave torque output.

## Description

### FIELD OF THE INVENTION

The present invention relates to a control system, for example a speed control system for multiple motors on a single shaft and particularly relates to master-slave speed controllers across functionally independent lanes.

### BACKGROUND OF THE INVENTION

The present invention relates to safety-critical multi-motor control applications, where continuing performance is required in the event of controller failure. Such systems usually use multiple control paths to increase system robustness. A relevant example would be motor control of aerospace VTOL (vertical take-off and landing) vehicles. In such instances propulsion propeller are each powered by at least two power paths, i.e., motors and controllers each of which is supplied with power from at least two independent HV (high voltage) supplies.

High power demands of aerospace often involve multiple power paths comprising independently controlled motors mechanically connected to the same propeller shaft or indirectly connected to each other via a common reduction gearbox into which they feed. Such robust safety led independence applies to separately housed motors and to e.g., motors with multiple electrically independent multi-phase windings that share the same rotor, magnetics and mechanicals.

In many applications including aircraft electric propulsion systems, several motors connected to a single shaft are usually governed in speed control. In aerospace electric propulsion systems speed control has safety integrity requirements up to DAL-A, i.e. Design Assurance Level-A, which includes catastrophic failure of an aircraft system, requiring designs to have defined and controlled dynamic response, which in the case of motive power to propellers, minimises high frequency torque transients that could lead to wear of mechanical components.

An obvious solution to this is for each motor controller to run a speed control algorithm which in turn creates a torque demand to drive its own motor. Such independent controllers, despite being run 'synchronously', have separate controller clocks for which small differences between the clock frequencies of each controller will occur. The result of even small differences in clock frequency means independent controllers will generate slight differences in 'measurement' of the common shaft speed.

For instance, a controller 1 with clock speed of 1MHz and controller 2 with clock speed of 0.999MHz i.e., a time step difference per cycle of 0.001µs. This is a cumulative effect and over 1second amounts to a 1ms time difference between controller control signals. Over a thousand seconds (16.7 mins) two motors one of which is run at 1MHz and the other at 0.999MHz will differ in speed by 16.7 rpm.

As a result, the controllers of each motor in the example will 'fight' each other, such that the torque in each motor is not balanced leading to excessive mechanical wear. Additionally, control of the motors can exhibit limit-cycle instability i.e. periodic oscillations with no settled position, which can lead to passenger discomfort and premature wear of mechanical components.

Lee, HJ., Lim, YH. & Oh, KK. Consensus Based Parallel Operation of Electric Motors Ensuring Speed Regulation and Load Torque Sharing. Int. J. Control Autom. Syst. 19, 3111-3121 (2021). https://doi.org/10.1007/s12555-020-0609-0 demonstrates the above noted problem of speed control Fig. 18 due to clock frequency differences and raises a potentially costly requirement for dedicated communication links between the separate drive systems.

Other factors such as sensor measurement error also produce very small differences between otherwise identical motor controllers, leading to the same 'fighting' behaviour when both are attempting to control to the same demanded speed value.

Such 'fighting' behaviour is well known in the practice of electric motor dynamometer testing, where typically two motors are mechanically connected to each other such that one drives the other (i.e. one is motoring and the other is generating, with the motors applying opposing torques to the connecting shaft). To avoid 'fighting' behaviour, it is standard practice to never operate both motors in 'speed control' mode (where each motor's controller is controlling to a commanded speed value) and instead always operate one motor in 'torque control' mode (where its controller is controlling to a commanded torque value) and the other in 'speed control' mode. Applying this configuration to the aforementioned aerospace propulsion system arrangement with multiple independent power lanes is not preferred for two reasons.

Firstly, during an event where the lane operating in 'speed control' fails or is otherwise disabled/de-energised, this arrangement requires the ability to switch the operating mode of the remaining lane controller from 'torque control' to 'speed control'; this introduces additional control logic complexity and associated potential failure modes.

Secondly, during normal operation (i.e. both lanes operating), the lane whose controller is operating in 'torque control' mode requires a torque demand/setpoint input to control to. Typically, without involving aircraft-level control system knowledge or intervention (which would introduce further undesirable complexity through aircraft-level communication, coordination and control system design), the origin of this torque demand value can only be from the other lane whose controller is operating in 'speed control' mode, since its internal speed control loop inherently yields the demanded torque value which is then applied equally across the two lanes. Providing a high-integrity communications function between the controllers of each lane (so that they can both apply the common demanded torque value) is very challenging due to the bandwidth required and the introduction of associated failure modes for this communications function.

US3688167A teaches multiple motors load balanced through gearing where demand to each motor inverter is a current demand from a global (vehicle level) speed controller.

Other control strategies, including sliding mode control (SMC), widely used to synchronise multi-motor systems, rely on high-speed communication links. Furthermore, close coupling between motors and SMC has inherent chattering issues similar to limit-cycle instability.

In view of the requirement for reliable multi-motor synchronisation for electric motor aircraft propulsors and deficiencies in available synchronisation technologies we have seen a need for a new synchronisation architecture suitable for aviation high integrity applications.

### SUMMARY OF THE INVENTION

The present invention is defined by the independent claims appended hereto. Further advantageous embodiments are also defined by the dependent claims, also appended hereto.

We describe a control system for a vehicle comprising an electrical machine. The control system comprises: a vehicle controller for outputting a speed demand for two or more electrical machines; a master inverter system coupled to the vehicle controller and configured to generate a master torque output for driving a first electrical machine, the master inverter system comprising a master speed controller for generating a master torque demand based on the speed demand from the vehicle controller and data indicating a speed of the first electrical machine; and a torque controller for generating the master torque output to drive the first electrical machine based on the master torque demand; one or more slave inverter systems coupled to the vehicle controller and configured to generate a respective slave torque output for driving a respective electrical machine, each of the slave inverter systems comprising: a slave model configured to output a respective slave torque demand based on the speed demand from the vehicle controller; and a slave torque controller for generating the respective slave torque output to drive the respective electrical machine based on the respective slave torque demand.

The master inverter system thus uses a closed-loop feedback control technique to generate the master torque demand for the first electrical machine, whereas the slave inverter systems use an open-loop control technique to generate the slave torque demand for the respective electrical machine. Advantageously, this arrangement removes the need for a dedicated high speed communications link between the master and slave inverters.

The master inverter system may comprise a master model for outputting a master torque demand based on the speed demand from the vehicle controller. The master model may comprise data representing a plurality of master torque demand outputs for a plurality of speed demands for an electrical machine. Alternatively, the master model may comprise a mathematical model for outputting a torque demand as a function of input speed demand.

In any of the above embodiments where the master inverter system comprises a model, the master inverter system may comprise a comparator coupled to the master speed controller and the master model, the comparator being configured to: compare the torque demand from each of the master speed controller and the master model; and update parameters in the master model such that the torque demand from the master model approaches, or is the same as, the torque demand from the master speed controller.

The master inverter system may be configured to communicate the updated parameters from the master model to one or more of the one or more slave inverter systems.

Advantageously, updating the model enables the model to more accurately represent the load torque versus speed characteristic ("load curve") of the propulsion system, resulting in equal thermal loading & power sharing between the master and slave(s). Furthermore, this approach means that the open-loop speed-to-torque model parameters/lookup table coefficients only need to be adjusted/tuned and communicated to the slave controllers at a rate that is fast enough to keep up with the variations of the load torque vs. speed characteristic

The master inverter system may be configured to pass the update parameters to one or more slave inverter systems via the respective couplings with the vehicle controller. Alternatively, the master inverter system may be configured to pass the update parameters to the one or more slave inverter systems via a dedicated communications coupling between the master inverter system and the one or more slave inverter systems.

One or more of the one or more slave inverter systems may be configured to update parameters in the respective slave model based on the updated parameters from the master inverter system.

In an alternative arrangement, one or more of the slave inverter systems may comprise a respective slave comparator coupled to the respective slave model, the slave comparator being configured to: compare the torque demand from each of the master speed controller and the respective slave model; and update parameters in the slave model such that the torque demand from the slave model approaches, or is the same as, the torque demand from the master speed controller.

The master inverter system may be configured to pass the master torque demand to one or more slave inverter systems via the couplings with the vehicle controller.

Any of the above control systems may comprise a communication link between the master inverter system and one or more of the slave inverter systems, and wherein the master inverter system may be configured to pass master torque demand data to the one or more slave inverter systems.

The data indicating a speed of the first electrical machine may comprise at least one of data from a speed sensor indicating the speed of the first electrical machine, data from a rotary position sensor indicating the rotor angle of the first electrical machine or data indicating a back EMF voltage from the first electrical machine.

The slave model may comprise data representing a plurality of torque demand outputs for a plurality of speed demands for an electrical machine. Alternatively, the slave model may comprise a mathematical model for outputting a torque demand as a function of input speed demand.

In any of the above, the vehicle controller may be configured to detect a failure in the master inverter system.

In such an arrangement, the vehicle controller may be configured to update parameters in the slave model in response to the detection of the failure in the master inverter system, the updated parameters for adjusting the slave torque output for at least partially compensating for the failed master inverter system.

Alternatively, the slave inverter system may comprises a slave speed controller for generating a slave torque demand based on the speed demand from the vehicle controller and data indicating a speed of the second electrical machine, and wherein the vehicle controller may be configured to instruct the slave inverter system to generate the slave torque output based on the slave torque demand from the slave speed controller instead of from the torque demand from the slave model.

We also describe an Electrical Propulsion Unit comprising: a first electrical machine; a second electrical machine, the first and second electrical machines being mechanically coupled to each other; and a control system as described above, wherein the master inverter system of the control system is electrically coupled to the first electrical machine for driving the first electrical machine, and wherein the slave inverter system is electrically coupled to the second electrical machine for driving the second electrical machine.

In any of the above systems, the first and respective electrical machines may be mechanically coupled to each other via a common output shaft. Alternatively, the first and respective electrical machines may be mechanically coupled to each other via a transmission unit.

The first and respective electrical machines may comprise independent first and second electrical machines. Alternatively, the first and respective electrical machines may comprise first and second electrically isolated groups of multi-phase windings in the same electrical machine, and wherein the first and second electrical machines are mechanically coupled to each other by one or both of a common rotor and a common output shaft.

In any of the above, the electrical machines may be axial flux electrical machines. The electrical machines may be motors or generators.

### LIST OF FIGURES

The present invention will be described, by way of example only, and with reference to the accompanying figures, in which:
Figure 1 which shows a logic block schematic of standard prior art control structure for a vehicle;
Figure 2 showing a prior art control structure during Cross-Inverter Communications Failure;
Figure 3 showing a prior art control structure during failure of the master inverter;
Figure 4 shows a control block diagram of the first embodiment of the invention;
Figure 5 shows a control block diagram of second embodiment the present invention;
Figure 6 shows a control block diagram of an alternative to Figure 5;
Figure 7 shows an embodiment of the control system of Figure 5 with a communication link;
Figure 8 shows an embodiment of the control system of Figure 4 with a communication link.
Figure 9 shows an implementation of the control system in an Electric Propulsion Unit;
Figure 10 shows an alternative implementation of the EPU of figure 9; and
Figure 11 shows a further alterative arrangement of an EPU.

### DETAILED DESCRIPTION OF THE PREFERRED EMBODIMENTS

In brief, the present invention relates to a control system for a vehicle comprising two or more electrical machines. A vehicle controller outputs a speed demand to a master inverter system and one or more slave inverter systems. The master inverter system is configured to generate a 'master torque' output for driving a first electrical machine based on the speed demand from the vehicle controller and data indicating the speed of the first electrical machine, and the one or more slave inverter systems are configured to generate a respective 'slave torque' output for driving a respective electrical machine based on the speed demand from the vehicle controller. The master inverter system uses a master speed controller to generate a master torque demand based on the speed demand from the vehicle controller and data indicating the speed of the first electrical machine, which is then passed to a master torque controller for generating the master torque output. The one or more slave inverter systems use a respective slave model to output a slave torque demand based on the speed demand from the vehicle controller, which is then passed to a respective slave torque controller for generating the respective slave torque output. The master inverter system thus uses a closed-loop feedback control technique to generate the master torque demand for the first electrical machine, whereas the slave inverter systems use an open-loop control technique to generate the slave torque demand for the respective electrical machine.

The present invention will be described below with detailed embodiments. To better understand advantages and differences of the present invention we will start by describing standard prior art approaches to synchronisation of motor units in high integrity applications contrasting with the present invention.

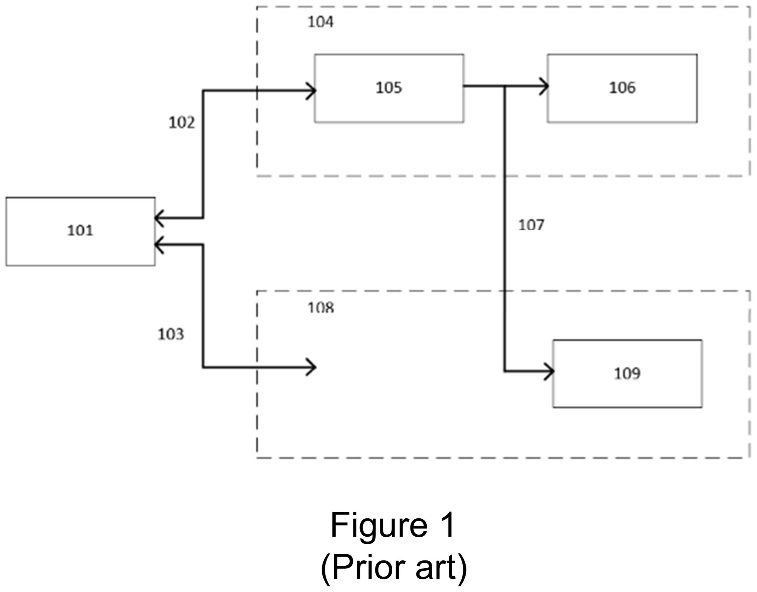

With reference to Figure 1 which shows a logic block schematic of standard prior art control structure for a vehicle (not shown) during normal operation. The vehicle controller (101) produces a speed demand that is sent to the master inverter (104) via bi-directional communication link 102 such that the master inverter (104) can send its status back through 102. The vehicle controller (101) also has a bi-directional communication link 103 to a slave inverter (108).

The master inverter (104) uses the speed demand in its master speed control (105) which in turn produces a torque demand that is fed to the master inverter's torque control (106) and 'simultaneously' via a cross-inverter high-speed communication link (107), to the slave inverter's (108) torque control (107). The update rate of the cross-inverter high-speed communication link (107) needs to be as fast as the motor torque control loop, which is much faster than the update rate of communications from the vehicle controller. The logic sequence is as follows.
- Vehicle controller 101 sends out a speed demand
- Master inverter 104 receives speed command.
- Master inverter's speed controller 105 creates torque demand for master inverters 104 and slave inverter 108.
- Slave inverter 108 receives its torque demand from the master inverter 104 over the cross-lane comms line 107.
- Slave inverter 108 communicates status to the Vehicle Controller 101 but does not take its control demand from the Vehicle Controller 101.

The prior art control system shown in Figure 1 for multi motor synchronisation requires a fast (≥10 MHz) communication line 107 between inverter lanes 104 and 108 to balance the torque demand without risk of the inverters fighting each other. The present invention does not require fast communication links to maintain the same level of synchronisation.

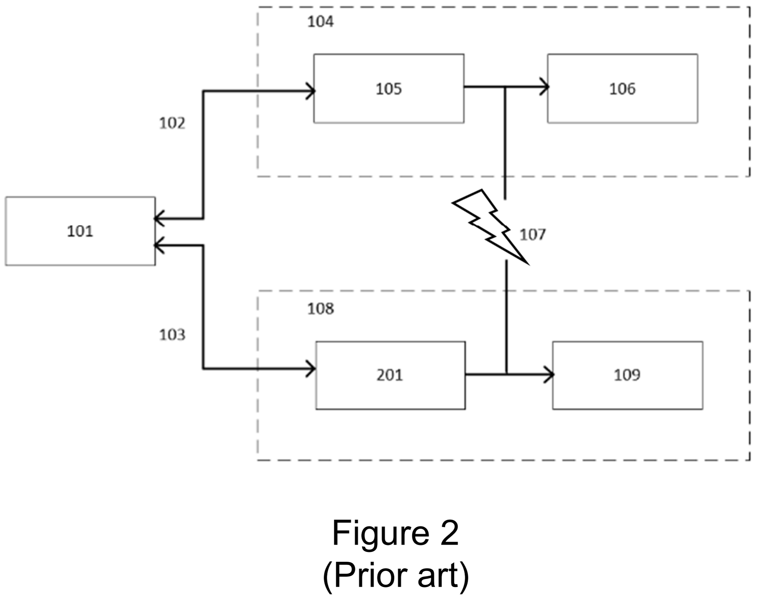

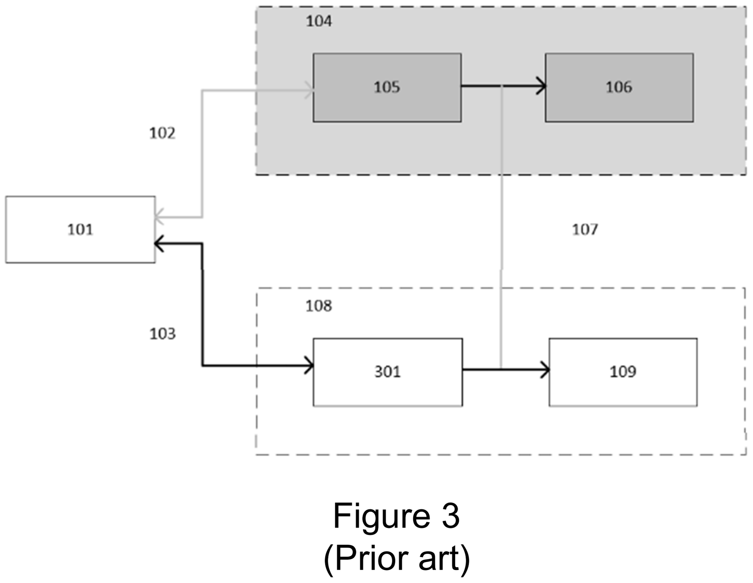

For high integrity control offering robustness against failure of the fast communications link or failure of a key component e.g., the master inverter, the standard approach is exemplified with reference to Figures 2 and 3, with Figure 2 showing a prior art control structure during Cross-Inverter Communications Failure and Figure 3 showing failure of the master inverter 104.

With reference to Figure 2, the vehicle controller (101) produces a speed demand that is sent to the master inverter (104) via the bi-directional communication link 102. The master inverter (104) can send its status back through 102. The vehicle controller (101) also has a bi-directional communication link 103 to the slave inverter (108) which also delivers the speed demand.

The master inverter (104) uses the speed demand in its master speed control (105) which in turn produces a torque demand that is fed to the master inverter's torque control (106). Under normal working circumstances the master inverter's torque demand sent to torque control 106, is also sent via the fast link cross-lane comms line 107 to the slave inverter 108. However, if the cross inverter high-speed communication link (107) fails, then the slave inverter (108) does not have access to the master speed control (105) output and so uses the speed demand sent via the slower communication (103) from the vehicle controller (101). To mitigate the instance of fast comms link 107 failure, the slave inverter 108 uses a limited authority speed control (201) to produce its own torque demand which is used by the slave inverter's (108) torque control (107). The limited authority speed control (201) is configured to minimise the slave 'fighting' the master speed control (105) and may include having a slower response time or lower bandwidth and perhaps a limited range of torque demands it can impose. Other limitations on slave inverter 108 may be applied to ensure it is beneficial to overall power output.

Similarly to the standard prior art control system described above, there remains reliance on a fast comms link 107 even though this is the source of failure, and failure mitigation additions i.e., a limited authority speed control (201), overly limits the system as a whole.

With reference to Figure 3 which shows a schematic of a prior art approach to mitigating master inverter 104 failure or the vehicle controller 101 to master inverter 104 communications link (102) has failed. In either case, even though materially operational, in practice with no source data, the cross-inverter high-speed communication link (107) is also no longer operational. In these instances of failure, the vehicle controller (101) produces a speed demand that is sent to the slave inverter (108) via the communication link 103. With the failure of the master inverter (104) or associated communication channels (102 or 107) the slave inverter (108) does not have access to the master speed control (105) output and so uses the speed demand sent via the slower communication (103) from the vehicle controller (101).

The slave inverter 108 uses a full authority speed control (301) to produce its own torque demand which is used by the slave inverter's (108) torque control (107). The slave inverter (108) is commanded by the vehicle controller (101), via communication link 103, to use the full authority speed control (301) rather than a limited authority speed control (201) shown in Figure 2.

As for previous prior art examples there remains a requirement for a fast comms link to maintain motor synchronisation, and prior art mitigation methodologies significantly limit the potential of power output, which could compromise the mission.

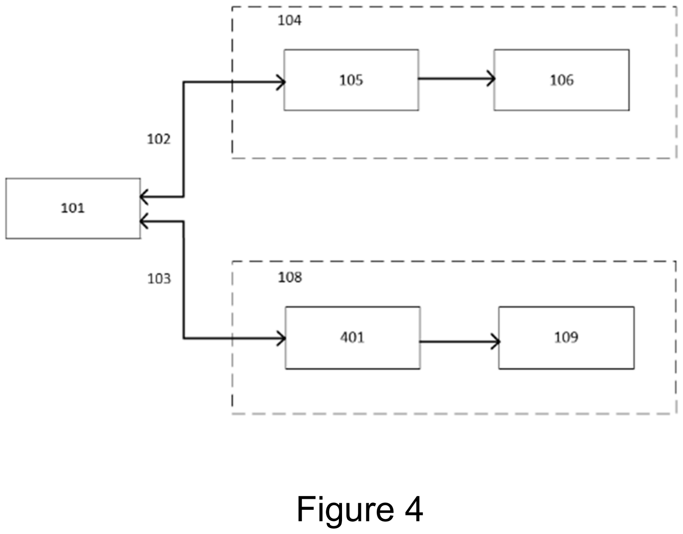

In contrast to the above prior art, we will describe the present invention
With reference to Figure 4 which shows a control block diagram of the first embodiment of the invention. The vehicle controller (101) produces a speed demand that is sent to the master inverter (104) via the bi-directional communication link 102. The master inverter (104) can send its status back through 102. The vehicle controller (101) also has a communication link 103 to the slave inverter (108).

The master inverter (104) uses the speed demand in its master speed control (105) which in turn produces a master torque demand that is fed to the master inverter's torque control (106).

The slave inverter (108) uses the speed demand in its "open-loop speed-to-torque model" (401), which in turn produces a slave torque demand that is fed to the slave inverter's torque control (109).

There is no requirement for a cross inverter high-speed communication link (107 in Figure 1).

The "open-loop speed-to-torque model" (401) uses the demanded speed as the input to the model to derive the required torque demand. This torque demand is then passed to its own torque controller 109 to control that motor (not shown). Model parameters (or look-up table) used by the "open-loop speed-to-torque model" (401) are characterised prior to operation and may be tuned for the particular aircraft, since it will be affected by factors such as the propeller type fitted and the number of motors driving the propeller.

This first embodiment is suited to applications where the load torque versus speed characteristic (also known as a "load characteristic" or "load curve") is well defined and time-invariant, such as for fluid pumps, fans and propellers. However, even in such applications there will be variations in the load torque versus speed characteristic due to changes in e.g. ambient air temperature & density (both of which are a function of altitude), as well as propeller pitch angle (which in many propulsion systems can be independently controlled by the aircraft/pilot and which the motor controller has no knowledge/visibility of). As a result, this approach does not guarantee even (i.e. equal) sharing of the torque load between motors since effectively there is error in the load torque versus speed characteristic used by the slave inverter which is not corrected or compensated for since it is running an open-loop speed control technique. Though this first embodied control method is advantageous in having no high-speed comms links and the system has robust integrity over failure of key components, there is further value in more precise load sharing to ensure that the thermal loading on each motor and inverter is also evenly shared, and that each motor and inverter (i.e. each lane) consumes equal electrical power.

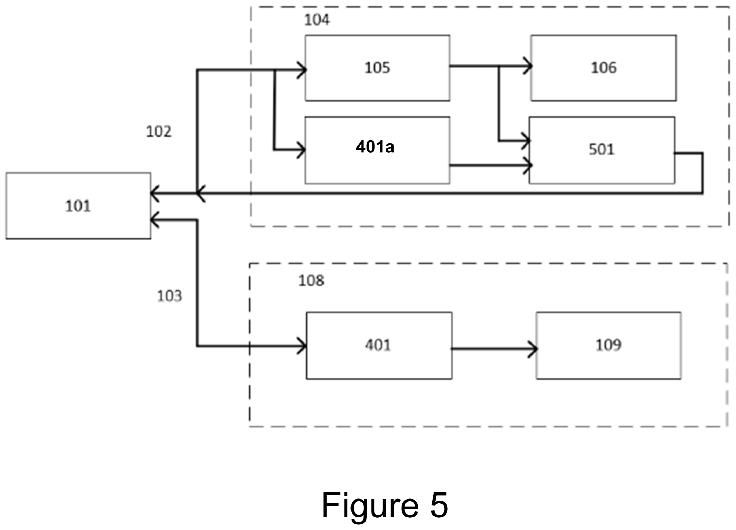

With reference to Figure 5 which shows a control block diagram of second embodiment the present invention. The vehicle controller (101) produces a speed demand that is sent to the master inverter (104) via the bi-directional communication link 102. The master inverter (104) can send its status back through 102. The vehicle controller (101) also has a bi-directional communication link 103 to the slave inverter (108).

The master inverter (104) uses the speed demand in its master speed control (105) which in turn produces a master torque demand that is fed to the master inverter's torque control (106).

The master inverter (104) also runs an "open-loop speed-to-torque model" (401a) in parallel with its master speed control (105). The outputs of these two blocks 105 and 401a are used by a "comparison and back calculate parameters" block (501) which continually or periodically back calculates and adjusts/tunes the parameters/data used in the master inverter's (104) "open-loop speed-to-torque model" (401a) so that the torque output from the model approaches or matches that from the master speed controller. These parameters/data are then transferred from the master inverter (104) to the vehicle controller (101) via bi-directional communication link 102 and then to the slave inverter (108).

The slave inverter (108) uses the speed demand from the vehicle controller (101) and the adjusted/tuned parameters/data (from the master inverter (104) via the vehicle controller (101)) in its "open-loop speed-to-torque model" (401) to produce a slave torque demand that is fed to the slave inverter's torque control (109). Since the "comparison and back calculate parameters" block (501) has adjusted/tuned the parameters/data used by the "open-loop speed-to-torque model" (401a) to match its output to that from the master speed control (105), the demanded torque output from the model 401 will also match that from the master speed control (105) and thus both master torque controller 106 and slave torque controller 109 will control to the same demand value.

An advantage of this approach is that the open-loop speed-to-torque model parameters/lookup table coefficients only need to be adjusted/tuned and communicated to the slave controllers at a rate that is fast enough to keep up with the variations of the load torque vs. speed characteristic. In applications such as pumps, fans and propellers where the load characteristics vary with e.g., ambient air temperature & density, this variation will be much slower that the dynamics of the speed controller itself, which allows a low-rate communication bus to be used for the communication between motor controllers. This holds even for faster changing variables that can influence the load characteristic, such as propeller pitch angle (in applications where a variable-pitch propeller is employed rather than a fixed-pitch propeller).

Many different types of adjustment scheme can be used to tune the look-up table coefficients/model parameters in the open loop torque-to-speed model 401a to match the master inverter's master speed controller 105 output, (e.g., recursive least squares optimisation of polynomial coefficients, spline interpolation, regularisation, etc).

An alternative to the master controller 104 adjusting the model 401a by updating the model's coefficients/parameters, is for the master controller 104 to pass the torque command from its closed loop speed controller 105 to the slave controllers 108 and for the slave controllers 108 to adjust their feedforward models 401 individually.

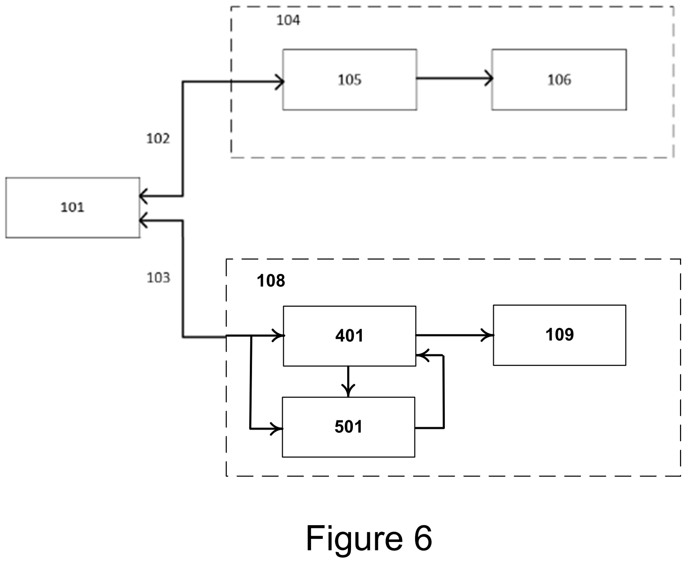

This alternative is shown in in Figure 6, where the slave controller 104 comprises a "comparison and back calculate parameters" block (501) which takes inputs from the torque demand from the master speed controller 105 and the slave torque demand output from the slave model 401. The outputs of these two blocks 105 and 401 are used by the "comparison and back calculate parameters" block (501) to back calculate and adjust/tune the parameters used in the slave inverter's (108) "open-loop speed-to-torque model" (401) so that the torque output from the model approaches or matches that from the master speed controller 105.

Providing independence to motor controllers removes the need for a dedicated high speed private communications bus between controllers, which reduces their size, cost, weight and development complexity and improves reliability. There is no loss of integrity of synchronisation between two motors powering a common shaft, in not having fast comms between master inverter and slave, because the rate of communication between the controllers only needs to be faster than the rate at which the load characteristics change, which in pumps, fans and propeller loads is typically much slower of the order of half to one second.

For example, in an EVTOL aerospace application, each controller is linked to a central flight controller by multiple redundant (and often dissimilar) communication buses. Controllers receive status information and speed commands from the flight controller and communicate status information back. Each 'public' bus communicates to multiple controllers, and the message rate is typically of the order of 10 milliseconds. Information can also be passed between controllers via the flight controller over the public bus, and this will add a transport delay of 3-4 messages, e.g. 30-40 ms. This is still much faster than variance occurring in environmental conditions.

Turning to the analysis of potential failure conditions, in the event that the slave inverter fails then the operation of the master inverter is unaffected, since it does not rely on any information/data from the slave. In the event that the master inverter fails, the operation of the slave inverter is only mildly affected; in the worst case it ceases to receive model update parameters and/or torque demand from the master inverter and simply continues to operate normally using the existing parameters. No change is required to its operating mode and it remains functionally independent. In this case however, since the speed control is effectively open-loop, the resultant speed will drop below that demanded by the vehicle/aircraft controller due to the reduction in net torque output due to the failed master inverter. To improve on this situation, additional functionality could be incorporated such that the vehicle/aircraft controller, upon detecting master inverter failure, either commands the slave inverter to transition to closed-loop speed control mode, or sends it updated open-loop model parameters to at least partially compensate for the loss of torque contribution from the failed master inverter. The vehicle controller could detect master inverter failure through one or more methods, which may include: receipt of fault messages from the master inverter (originating from the inverter detecting an internal fault) ; detection of loss of communication integrity via communication protocol features/functions such as message error-detecting codes or other methods for checking message validity ; time-out of communication bus messages ; loss of "heartbeat" communication messages/signals from the master inverter to the vehicle controller ; excessive and prolonged deviation in motor speed output from vehicle demand ; excessive and prolonged deviation in controller electrical power consumption (when compared with an estimate of the expected consumption based on knowledge of the motor speed).

Though we have discussed the benefits of removing fast communications buses, based on safety integrity and cost of implementation, this is not because fast comms busses are inherently problematic. It is because reliance on a fast comms bus and mitigation strategies to accommodate its failure are not sufficiently robust to provide the high level of safety required in aerospace motive power applications.

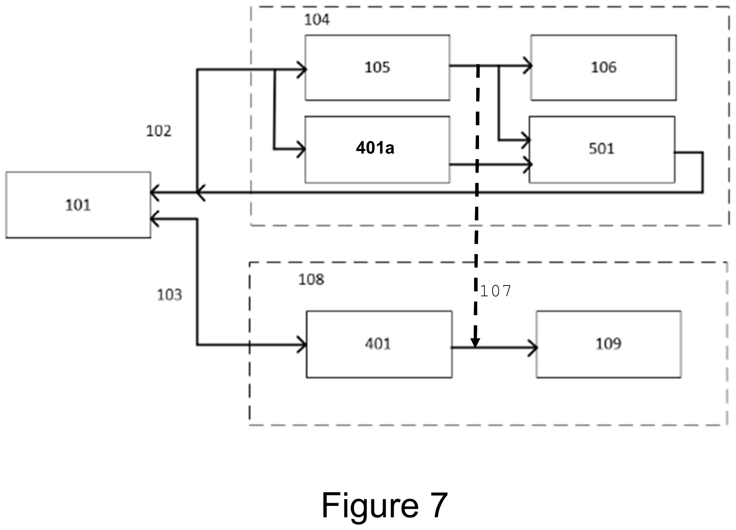

It is nevertheless possible to combine high speed bus communication links with the present invention. With reference to Figure 7, there is shown a control block diagram showing full elements of the present invention as described above in embodiment 2 and with reference to Figure 5, including a fast communication link 107.

A master controller 104 runs a closed loop speed control 401a, modelled on the speed controller 105 and updated by a feedback comparator 501. The master controller 104 also sends torque commands to the slave controllers 108 over a private bus 107. To meet the dynamic requirements of the speed controller (typically up to 20 Hz bandwidth), this requires a transport delay of no more than ~ 2 ms, which requires dedicated private bus 107.

In contrast to the lagging and less than full capability situation described above in the prior art failure of a fast communication link 107, in the instance show in Figure 7 the present invention steps in to fully replicate synchronised motor control in the event of failure of fast comms link 107. The private bus 107 does not require duplicate redundancy, which means there is only a single private high-speed bus 107 channel and harness, not multiple channels and harnesses. If private bus 107 has a fault, slave controllers 108 will switch to use open-loop control and a warning will be sent to the pilot.

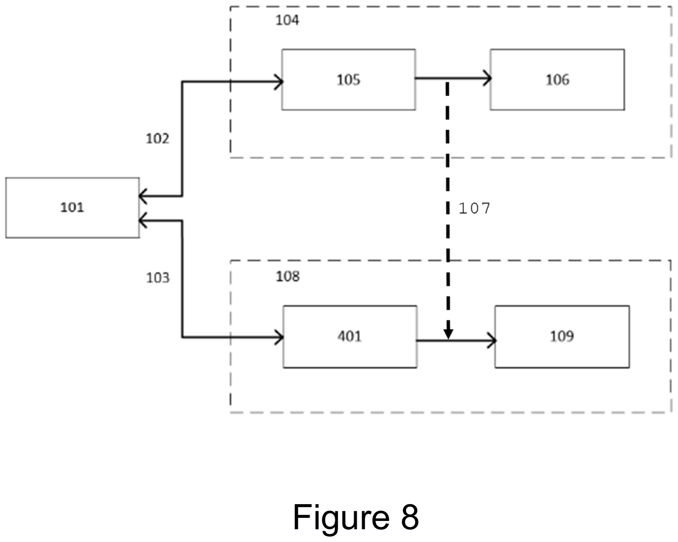

If a private bus link 107 is applied to the less adaptive first embodiment of the present invention as shown in Figure 8 and private bus link 107 were to fail, then open-loop control would no longer be adapting, and load balance between motors is likely to change over time, resulting in uneven thermal loading and power draw between the motors. In this situation, a warning will be sent to the pilot and the pilot may take action to end the mission early. Without the present invention, multiple high speed bus channels would be needed to achieve redundancy, increasing size, cost, and weight.

In summary, we have described an invention that removes a widely used solution of high-speed communication links that enables operation of multiple motors powering a single shaft in a high safety integrity aerospace motive power application.

In a usual configuration of operating multiple motors to power a single shaft, a controller acts as a master controller, generating a torque demand to achieve a desired speed. This torque demand is usually split evenly between the number of motors on the shaft and passed to the other controllers via a private communication bus. A private bus is required to achieve the low latency necessary between the inverters (including effects of asynchronous delays) and the speed of communication is typically a minimum of ten times shorter than the reciprocal of the bandwidth of the speed controller requiring approximately 100 µs response time. Being safety critical, a standard solution would require at least a redundant channel for each link to each motor adding cost and weight and volume of wiring.

An alternative standard solution also requires a private high-speed bus to pass a signal between the controllers so that their frequencies can be accurately synchronised in an approach that is like a phase locked loop. This enables each controller to independently run a speed control algorithm without fighting each other. Loss of the synchronisation signal line causes loss of control and fighting between motors on a single shaft and to avoid this at least one redundant high-speed comms link is required, similarly adding cost, weight and bulk.

The proposed invention builds on existing control architectures and does not require high speed communication, but uses a technique utilising the relative fast existing speed control bitrates when compared to natural environmental changes to which torque loading needs to respond. This at best eliminates the need for a private communication bus, and worst requires only a single private communication bus rather than multiple redundant channels.

One possible implementation of the control systems described above is within an Electric Propulsion Unit (EPU).

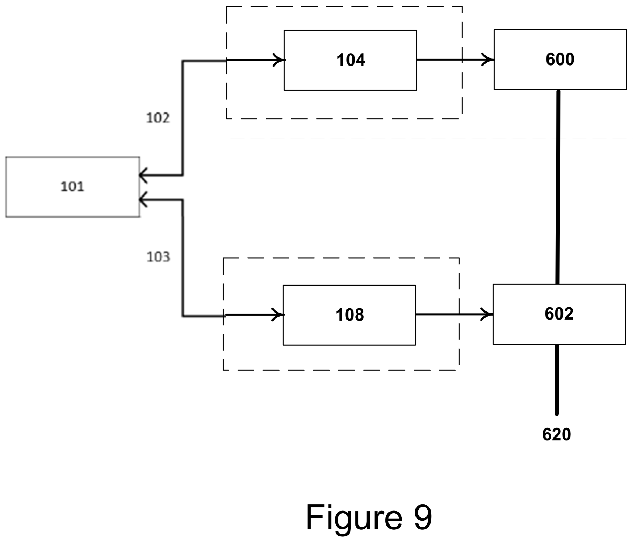

Figures 9 shows an example implementation of the control system in an EPU. The EPU comprises a first electrical machine 600, a second electrical machine 602 and the control system described above. Figure 9 shows a simplified representation of the control system, so only the vehicle controller 101, master inverter system 104 and slave inverter system 108 are shows for the sake of clarity. It is to be understood that the master 104 and slave 108 inverter systems may comprise any of the implementations as described above.

The output of the master inverter system 104 is electrically coupled to the first electric machine 600 for driving the first electrical machine using the master torque output, and the slave inverter system 108 is electrically coupled to the second electric machine 602 for driving the second electric machine using the slave torque output. In this arrangement, the first 600 and second 602 electrical machines are mechanically coupled to each other via a common output shaft 620.

The master 104 and slave 108 inverter systems receive a speed demand from the vehicle controller 101 and the master and slave inverter systems drive the first 600 and second 602 electric machines as described above.

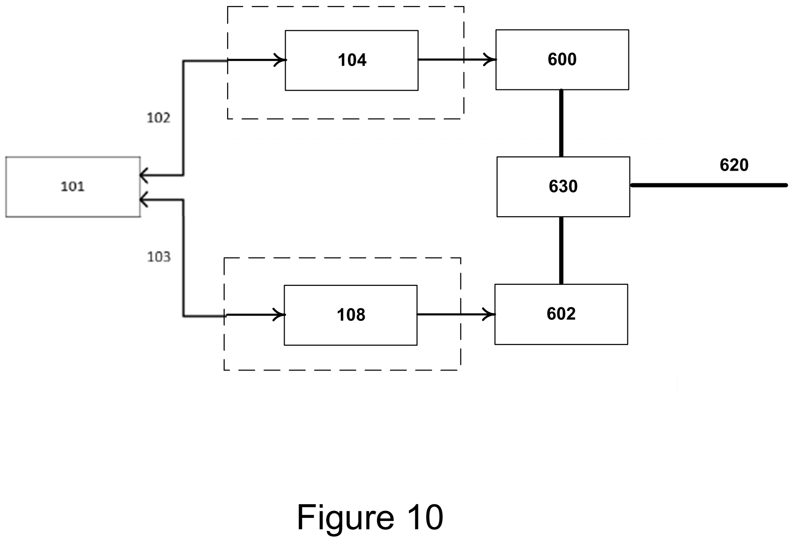

Figure 10 shows an alternative EPU arrangement to that of figure 9. In figure 10, the master 104 and slave 108 inverter systems drive respective first 600 and second 602 electric machines as in figure 9. However, in figure 10, the first 600 and second 602 electric machines are instead mechanically coupled to each other via a transmission unit 630, which drives an output shaft 620.

In either of the above implementations as described with reference to figures 9 and 10, the first 600 and second 602 electrical machines may be independent first and second electrical machines that are mechanically coupled to each other.

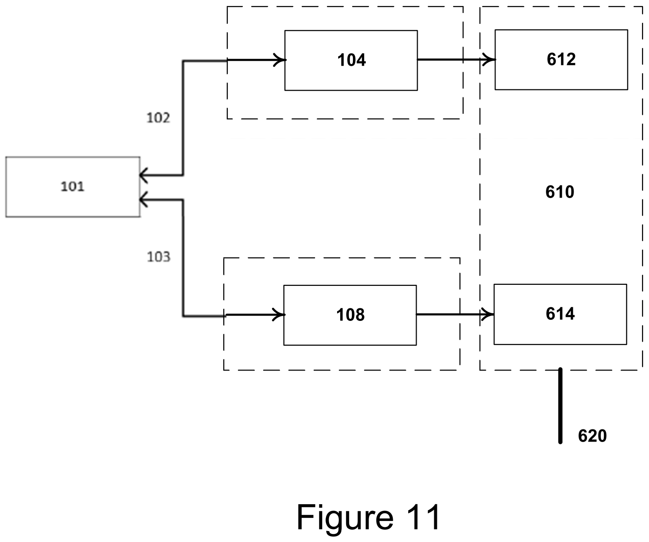

Figure 11 shows a further alternative arrangement of the EPU. As with figures 9 and 10, the master 104 and slave 108 inverter systems drive respective first and second electric machines. However, in figure 11, the first 612 and second 614 are electrically isolated groups of multi-phase windings in the same electrical machine 610. In this example, the first 612 and second 614 electrical machines may be mechanically coupled to each other by a common rotor. They may also be mechanically coupled to each other via a common output shaft 620.

In any of the above implementations of the EPU, the electrical machines may be axial flux electrical machines. They may also be configured as electrical motors or generators.

No doubt many other effective alternatives will occur to the skilled person. It will be understood that the invention is not limited to the described embodiments and encompasses modifications apparent to those skilled in the art lying within the scope of the claims appended hereto.

## Claims

**1.** A control system for a vehicle comprising an electrical machine:
a vehicle controller for outputting a speed demand for two or more electrical machines;
a master inverter system coupled to the vehicle controller and configured to generate a master torque output for driving a first electrical machine, the master inverter system comprising a master speed controller for generating a master torque demand based on the speed demand from the vehicle controller and data indicating a speed of the first electrical machine; and a torque controller for generating the master torque output to drive the first electrical machine based on the master torque demand;
one or more slave inverter systems coupled to the vehicle controller and configured to generate a respective slave torque output for driving a respective electrical machine, each of the slave inverter systems comprising: a slave model configured to output a respective slave torque demand based on the speed demand from the vehicle controller; and a slave torque controller for generating the respective slave torque output to drive the respective electrical machine based on the respective slave torque demand.

**2.** A control system according to claim 1, wherein the master inverter system comprises a master model for outputting a master torque demand based on the speed demand from the vehicle controller, optionally
wherein the master model comprises data representing a plurality of master torque demand outputs for a plurality of speed demands for an electrical machine, or
wherein the master model comprises a mathematical model for outputting a torque demand as a function of input speed demand.

**3.** A control system according to claim 2, wherein the master inverter system comprises a comparator coupled to the master speed controller and the master model, the comparator being configured to:
compare the torque demand from each of the master speed controller and the master model; and
update parameters in the master model such that the torque demand from the master model approaches, or is the same as, the torque demand from the master speed controller.

**4.** A control system according to claim 3, wherein the master inverter system is configured to communicate the updated parameters from the master model to one or more of the one or more slave inverter systems, optionally
wherein the master inverter system is configured to pass the update parameters to one or more slave inverter systems via the respective couplings with the vehicle controller, or
wherein the master inverter system is configured to pass the update parameters to the one or more slave inverter systems via a dedicated communications coupling between the master inverter system and the one or more slave inverter systems.

**5.** A control system according to claim 4, wherein one or more of the one or more slave inverter systems is configured to update parameters in the respective slave model based on the updated parameters from the master inverter system.

**6.** A control system according to claim 1, wherein one or more of the slave inverter systems comprises a respective slave comparator coupled to the respective slave model, the slave comparator being configured to:
compare the torque demand from each of the master speed controller and the respective slave model; and
update parameters in the slave model such that the torque demand from the slave model approaches, or is the same as, the torque demand from the master speed controller.

**7.** A control system according to claim 6, wherein the master inverter system is configured to pass the master torque demand to one or more slave inverter systems via the couplings with the vehicle controller.

**7.** A control system according to any preceding claim, comprising a communication link between the master inverter system and one or more of the slave inverter systems, and wherein the master inverter system is configured to pass master torque demand data to the one or more slave inverter systems, and/or
wherein the data indicating a speed of the first electrical machine comprises at least one of data from a speed sensor indicating the speed of the first electrical machine, data from a rotary position sensor indicating the rotor angle of the first electrical machine or data indicating a back EMF voltage from the first electrical machine.

**8.** A control system according to any preceding claim, wherein the slave model comprises data representing a plurality of torque demand outputs for a plurality of speed demands for an electrical machine, or
wherein the slave model comprises a mathematical model for outputting a torque demand as a function of input speed demand.

**9.** A control system according to any preceding claim, wherein the vehicle controller is configured to detect a failure in the master inverter system, optionally
wherein the vehicle controller is configured to update parameters in the slave model in response to the detection of the failure in the master inverter system, the updated parameters for adjusting the slave torque output for at least partially compensating for the failed master inverter system, or
wherein the slave inverter system comprises a slave speed controller for generating a slave torque demand based on the speed demand from the vehicle controller and data indicating a speed of the second electrical machine, and wherein the vehicle controller is configured to instruct the slave inverter system to generate the slave torque output based on the slave torque demand from the slave speed controller instead of from the torque demand from the slave model.

**10.** A control system according to any preceding claim, wherein the first and respective electrical machines are mechanically coupled to each other via a common output shaft, or
wherein the first and respective electrical machines are mechanically coupled to each other via a transmission unit.

**11.** A control system according to claim 10, wherein the first and respective electrical machines comprise independent first and second electrical machines, or
wherein the first and respective electrical machines comprise first and second electrically isolated groups of multi-phase windings in the same electrical machine, and wherein the first and second electrical machines are mechanically coupled to each other by one or both of a common rotor and an output shaft.

**12.** An Electrical Propulsion Unit comprising:
a first electrical machine;
a second electrical machine, the first and second electrical machines being mechanically coupled to each other; and
a control system according to any one of claims 1 to 11,
wherein the master inverter system of the control system is electrically coupled to the first electrical machine for driving the first electrical machine, and wherein the slave inverter system is electrically coupled to the second electrical machine for driving the second electrical machine.

**13.** An Electrical Propulsion Unit according to claim 12, wherein the first and second electrical machines are mechanically coupled to each other via a common output shaft, or
wherein the first and second electrical machines are mechanically coupled to each other via a transmission unit.

**14.** An Electrical Propulsion Unit according to claim 13, wherein the first and second electrical machines are independent first and second electrical machines, or
wherein the first and second electrical machines comprise first and second electrically isolated groups of multi-phase windings in the same electrical machine, and wherein the first and second electrical machines are mechanically coupled to each other by one or both of a common rotor and a common output shaft.

**15.** A control system according to any one of claims 1 to 11, or an Electrical Propulsion Unit according to any one of claims 12 to 14, wherein the electrical machines are axial flux electrical machines, and/or
wherein the electrical machines are motors or generators.
